# EUROPEAN PATENT APPLICATION

(11) **EP 3 994 998 A1**
(43) Date of publication of application: **11.05.2022**
(21) Application number: 21187910.1
(22) Date of filing: 27.07.2021
(51) Int. Cl.: A23C 9/142, A23C 9/15, A23C 19/05, A23C 19/09, A23L 27/24

(54) **FLAVOR FERMENT TO PRODUCE NATURAL CHEESE WITH SPECIFIC FLAVOR ATTRIBUTES**

(30) Priority: 27.07.2020 US 202063056821 P
(71) Applicant: Sargento Foods Inc., Plymouth, WI 53073 (US)
(72) Inventor: SAINANI, Mihir, Elkhart Lake, 53020 (US); SHAH, Kartik, Elkhart Lake, 53020 (US); DÜSTERHÖFT, Eva-Maria, 6710 BA Ede (NL); ENGELS, Willem Johannes Marie, 6710 BA Ede (NL)
(74) Representative: Forresters IP LLP

(57) **Abstract**

The invention relates to a flavor ferment for use in a natural cheese make process.

## Description

### CROSS-REFERENCE TO RELATED APPLICATIONS

The application claims the benefit of Provisional Application No. 63/056,821, filed 7/27/2020, which is hereby incorporated by reference.

### FIELD OF THE INVENTION

The invention relates to the field of natural cheese and producing natural cheese with specific flavor attributes using a flavor ferment.

### BACKGROUND OF THE INVENTION

Natural cheese can be tuned for flavor with the additional of a flavor ferment.

### SUMMARY OF THE INVENTION

The present invention includes a flavor ferment for use in a natural cheese make process comprising a milk based substrate and having a free amino acid level of 200000-400000 µmol/L.

The present invention includes a flavor ferment for use in a natural cheese make process comprising a milk based substrate and having a glutamic acid level of 20000-60000 µmol/L

The present invention includes a flavor ferment for use in a natural cheese make process comprising a milk based substrate and having sweet tasting amino acids values of 5000-10000 µmol/L for glycine, 10000-30000 µmol/L for alanine and 10000-30000 µmol/L for proline.

The present invention includes a flavor ferment for use in a natural cheese make process comprising a milk based substrate and having organic acids content of approximately 30-70 mg/g of lactic acid, 1.0-5.0 mg/g of succinic acid, 0.2-5.0 mg/g of acetic acid, and 0.2-9.0 mg/g of propionic acid.

The present invention includes a flavor ferment for use in a natural cheese make process comprising a milk based substrate and having a free amino acid level of 200000-400000 µmol/L, having a glutamic acid level of 20000-60000 µmol/L, having sweet tasting amino acids values of 5000-10000 µmol/L for glycine, 10000-30000 µmol/L for alanine and 10000-30000 µmol/L for proline, and having organic acids content of approximately 30-70 mg/g of lactic acid, 1.0-5.0 mg/g of succinic acid, 0.2-5.0 mg/g of acetic acid, and 0.2-9.0 mg/g of propionic acid.

The present invention includes a method for producing natural cheese with flavor attributes similar to processed cheese, said method including the steps of creating a flavor ferment using one of reconstituted milk, concentrated milk, membrane filtered milk, UHT milk as a substrate and having the flavor attributes of processed cheese, and adding the flavor ferment during the production of natural cheese.

### BRIEF DESCRIPTION OF THE DRAWINGS

Preferred exemplary embodiments of the invention are illustrated in the accompanying drawings in which like reference numerals represent like parts throughout, and in which:
FIG. 1 is a flowchart relating to creating a flavor ferment for use in making natural cheese with specific flavor attributes;
FIG. 2 is a flowchart relating to creating a flavor ferment for use in making natural cheese with specific flavor attributes;
FIG. 3 is a pair of graphs relating to free amino acids in the final ferment; and
FIG. 4 is a graph depicting individual free amino acid levels in Ferment A and Ferment B.

Before any embodiments of the invention are explained in detail, it is to be understood that the invention is not limited in its application to the details of constructions and the arrangement of components set forth in the following description or illustrated in the drawings. The invention is capable of other embodiments and of being practiced or of being carried out in various ways.

### DETAILED DESCRIPTION

The invention relates to a flavor ferment for use in making natural cheese with tuned flavor attributes and with an ingredient statement as with a Standard of Identity cheese. The invention utilizes processes within the boundaries of conventional cheese make technology which allow for the making and using of a flavor ferment for tuning natural cheese flavors towards the characteristics of other cheeses such as that of processed cheese. The flavor tuned attributes can include salty, umami, sweet, diacetyl and milky/creamy and processed cheese flavors. The flavor processes can also be integrated with processes to achieve desired texture attributes.

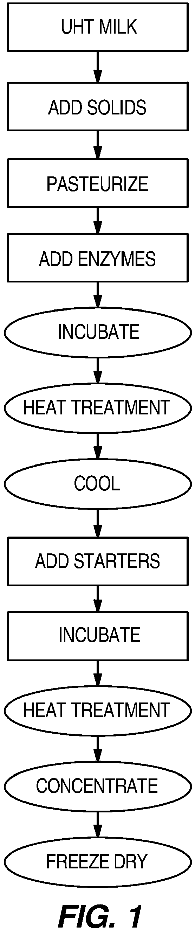

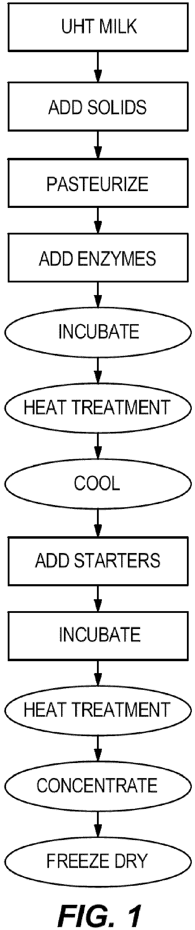

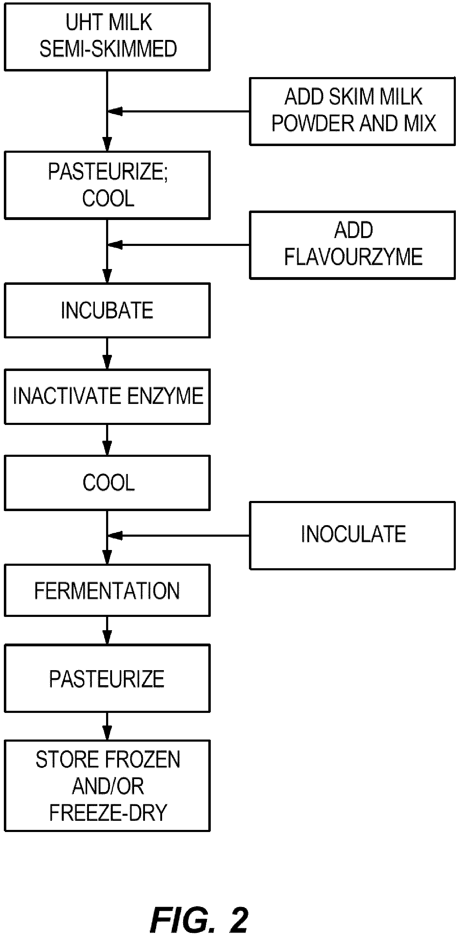

There is shown in Figs. 1 and 2 methods for creating a flavor ferment in line with the natural cheese ingredient statement. The methods produce a flavor ferment produced by fermentation that has an ingredient statement identical to natural cheese. Specifically, the method entails use of a milk based substrate, such as reconstituted milk, concentrated milk, membrane filtered milk, UHT milk for example, for flavor ferment creation. Milk based solids such as nonfat dry milk and ultrafiltered milk can be added to the substrate to increase the milk solids of the substrate. The substrate is pasteurized for a period of time and temperature such as, for example, 30 minutes as 102°C. Enzymes are added and incubation follows such as, for example, 5 hours. Heat treatment follow such as, for example, 10 minutes at 75°C followed by cooling to 35 C. Starter cultures are then added at 37°C for example followed by incubation for 5-6 days, for example. The incubation can be conducted aerobically or anaerobically. Heat treatment follows such as, for example, 3 minutes at 75°C. The ferment is concentrated using drying techniques such as freeze drying, spray drying and the like. Powdered ferment can be reconstituted to 3x to 8x concentration prior to use.

The flavor ferment produced generates flavor attributes of processed cheese such as umami, savory, brothy, soapy, lipolytic, cheese like, sweet Parmesan, creamy, diacetyl, fruity and sweet flavors. Starter culture growth conditions such as time, temperature, dosage level, and pH can be varied to generate a flavor ferment having desired flavor attributes. The flavor ferment is preferably concentrated, pasteurized and added in the cheese making process at a varied rate to generate a stable, consistent intended flavor attributes to natural cheese.

The flavor ferment can have the following attributes umami, savory, brothy, soapy, lipolytic, cheese like, sweet Parmesan, creamy, diacetyl, fruity and sweet flavors.

It should also be pointed out that the flavor ferment can be tuned to produce cheeses with unami, brothy flavors that are not specific attributes of processed cheese such as, for example, cheddar, gouda, parmesan, swiss, pasta filata etc. like flavors.

Selected lactic acid bacteria (LAB) and/or propionic acid bacteria (PAB) are applied in well controlled fermentations. The focus is on the creation of umami/salty and possibly sweet-butter-like flavors in milk. The cultures chosen for achieving this were lactobacillus (e.g., *Lb. helveticus, Lb. acidophilus*) for umami/salty flavors, *L. lactis diacetylactis* and/or specific lactobacilli for buttery/diacetyl flavor and Propionibacterium for sweet and/or lipolytic flavor formation. The metabolic processes of these cultures included: proteolysis by lactobacilli for peptide and free amino acid formation for umami, salty, sweet flavors; citric acid metabolism by *L. lactis diacetylactis* yielding diacetyl for buttery flavor; and lactate to propionic acid conversion, and fat metabolism (lipolysis), by PAB for sweet, and processed cheese flavors. PAB produce propionic acid from the lactic acid produced by LAB. The cultures selected for fermentative flavor formation screening included both mixed cultures and single strains. See Table 1.

**Table 1. Sensory Scores**

| **No** | **Strain** | **Flavor properties of ferments** |
|---|---|---|
| 1 | lactobacilli | Salty/brothy, sweet |
| 2 | thermophilic lactobacilli | Sweet, brothy, cheese |
| 3 | thermophilic lactobacilli | Salty/umami, brothy, acid |
| 4 | thermophilic lactobacilli | Acid, bitter, soapy |
| 5 | *L. lactis diacetylactis* | Sweet, fresh, acid, little butter |
| 6 | thermophilic lactobacilli | Salty, fruity, lipolysis |
| 7 | thermophilic lactobacilli | Salty, sweet/fruity, cheese, positive |
| 8 | LD mesophilic starter | Umami/salty, sweet, umami, mild |
| 9 | *Str. thermophilus*+Lb. helveticus | Cheese,broth,salty, brothy, processed cheese? |
| 10 | *Lb. casei* | Sweet, fatty acids, |
| 11 | *Lb. paracasei* | Soapy, brothy, processed cheese |
| 12 | *Lb. helveticus* such as LH 13 | Strongly brothy/umami, fruity, cheese |

Based on the preliminary flavors generated from Table 1 further experiments were designed to simulate processed cheese flavors which included various rates of addition of lactic acid bacteria and use of biocatalysts (Enzymes). See Table 2.

**Table 2. Flavor Tailoring**

| | | ***Enzymes and conditions*** | | | | ***Cultures and Conditions*** | | | |
|---|---|---|---|---|---|---|---|---|---|
| ***Sr. no.*** | ***Enzyme*** | ***Dosage (%)*** | ***Time (h)*** | ***Temp (°C)*** | | ***Culture*** | ***Dosage (%)**** | ***Time (days)*** | ***Temp (°C)*** |
| 1 | Flavourzyme | 0.3 | 1.5 | 37 | | LH13 | 1 | 6 | 37 |
| 2 | Amano A | 0.3 | 1.5 | 37 | | LH13 | 1 | 6 | 37 |
| 3 | Flavourzyme | 0.3 | 1.5 | 37 | | CR-Savory01 | 1 | 6 | 37 |
| 4 | Flavourzyme | 0.3 | 1.5 | 37 | | LH32 | 1 | 6 | 37 |
| 5 | Amano A | 0.3 | 1.5 | 37 | | LH32 | 1 | 6 | 37 |
| 6 | Flavourzyme | 0.3 | 1.5 | 37 | | LH13+PAB NIZ0379 | 1+5 | 6 | 35 |
| 7 | Flavourzyme | 0.3 | 1.5 | 37 | | LH13+PAB NIZ0379 | 1+5 | 6 | 30 |

Example 1. Milk was treated prior to fermentation with proteolytic enzymes to enhance flavor formation. The enzymes applied were Flavourzyme (Sigma-Novo) and Amano A (Amano). The dosage of both enzymes was 0.3% (m/m - based on literature and supplier information) and incubation was for 1.5 hours at 37°C. Thereafter, the enzymes were inactivated by 10 minutes 75°C treatment prior to inoculation with the cultures and subsequent incubations. Example 1 is designed for the formation of more intense flavors further directing the flavor formation especially towards salty, umami, sweet and generating cream/milky-based flavors.

Preliminary flavor attributes were identified based on an informal sensory evaluation using combination from Table 2. Results of these flavors are outlined in Table 3.

**Table 3. Sensory Scores**

| **No** | **Code** | **Flavor properties of ferments** |
|---|---|---|
| 1 | Flavourzyme treatment + *Lb. helveticus* | Acid, salty/brothy, sweet parmesan |
| 2 | Amano A treatment + *Lb. helveticus* | Sweet, salty, processed cheese? |
| 3 | Flavourzyme treatment + lactobacilli | Salty/umami, brothy, acid |
| 4 | Flavourzyme treatment + thermophilic lactobacilli | Acid, salty, cheese-like |
| 5 | Amano A treatment + thermophilic lactobacilli | Acid, salty, sweet, cheese, complex |
| 6 | Flavourzyme treatment + *Lb. helveticus* + PAB NILZO3 79 35°C | Acid, sweet, creamy, diacetyl, brothy |
| 7 | Flavourzyme treatment + *Lb. helveticus* + PAB NIZO379 30°C | Sweet, brothy, less complex |

Possible adaptations include: (i) application of semi-skimmed milk or full fat milk instead of skimmed milk, (ii) prolonged enzyme pre-incubation (5 hours instead of 1.5 hours) iii) higher dosage (0.3 and 0.6%), (iv) application of alternative enzymes or biocatalysts, and (v) additional application of PAB (vi) adapting the pH during fermentation (vii) adding multiple starter and adjunct bacteria.

PAB were applied in combination with selected Lactobacillus-containing cultures. PAB strain NIZO379 was applied and inoculation rate was 5% of a full-grown pre-culture in lactate broth. Lactobacilli were inoculated at 1%. All fermentations described above were for 6 days at pH 5.7 and 37°C, except those with PAB which were at 35°C and 30°C. The results of sensory evaluation are shown in Table 3.

After selection of flavors of interest and combination of lactic acid bacteria and biocatalysts, free amino acid and glutamic acid levels were evaluated in the final ferment. Examples are listed in Table 4.

**Table 4. Flavor tailoring (for evaluation of effect on free amino acid and glutamic acid levels).**

| | *Enzymes and conditions* | | | | *Cultures and Conditions* | | | |
|---|---|---|---|---|---|---|---|---|
| *Enzyme* | *Dosage (%)* | *Time (h)* | *Temp (°C)* | | *Culture* | *Dosage (%)** | *Time (days)* | *Temp (°C)* |
| Flavourzyme | 0.3 | 1.5 | 37 | | LH13 | 1 | 6 | 37 |
| Amano A | 0.3 | 1.5 | 37 | | LH13 | 1 | 6 | 37 |
| Flavourzyme | 0.3 | 1.5 | 37 | | CR-Savory01 | 1 | 6 | 37 |
| Flavourzyme | 0.3 | 1.5 | 37 | | LH32 | 1 | 6 | 37 |
| Amano A | 0.3 | 1.5 | 37 | | LH32 | 1 | 6 | 37 |
| Flavourzyme | 0.6 | 5 | 37 | | LH13 | 1 | 6 | 37 |
| Flavourzyme | 0.6 | 5 | 37 | | LH13+PAB NIZ0379 | 1+5 | 6 | 37 |
| Flavourzyme | 0.6 | 5 | 37 | | LH13+PAB NIZO384 | 1+5 | 6 | 37 |

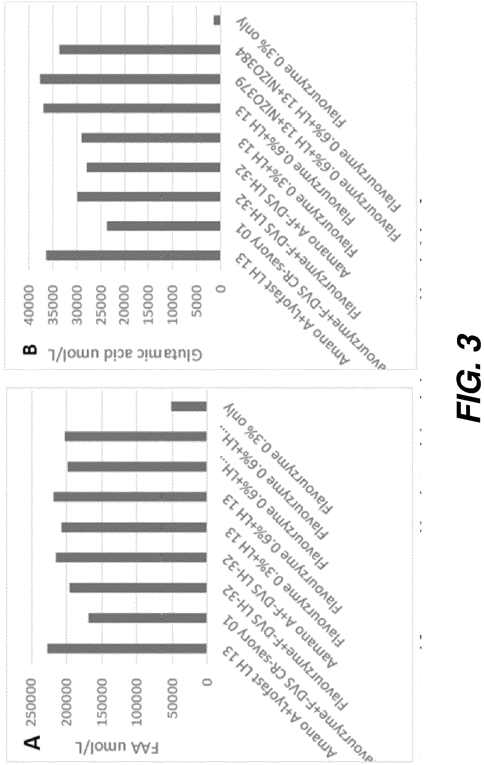

Free amino acid graphs are shown in FIG. 3 with the left graph being the total free amino acid level (FAA) and the right graph being the glutamic acid levels in the ferment.

With respect to sensory results of fermentations involving 5 hour 0.3% enzyme pre-incubation and PAB culture NIZO384, a high level of saltiness/brothiness was achieved by combining Flavourzyme incubation with the culture. Additional application of PAB NIZO379 added sweetness to the flavor, but reduced saltiness/brothiness. Umamizyme, replacing Flavourzyme, created some bitterness and other less desired flavor notes, while also sweetness by PAB NIZO379 decreased markedly. When increasing the Flavourzyme dosage from 0.3 to 0.6%, especially saltiness/brothiness was enhanced, but sweetness was also strengthened, in particular with PAB NIZO379. The ferment was judged to have "Swiss cheese-like" notes, whereas the ferment with PBA NIZO384 was described as "complex".

Further 5% (m/m) of the culture, combined with both Flavourzyme and Umamizyme and with and without PAB cultures, were used. The results showed that saltiness/brothiness were perceived. Increased sweetness was perceived when using the PAB culture NIZO379. Application of five times concentrated ferment was tested and an increased salty/brothy flavor was perceived.

For further intensifying flavor formation, an additional series of fermentations can be performed such as fortifying the semi-skimmed milk basis by addition of skim milk powder, SMP (10%) and WPC35 (10%), applying alternative proteases to replace Flavourzyme as are known in the art, and adapting the pH during fermentation at pH 5.4, 5.7 and 6.0. Use of WPC is not consistent with ingredient statement of natural cheese. However, the addition was experimented to understand if the cooked notes can be generated in the final ferment. The conditions during fermentation included dosage of 0.3% (m/m) of enzymes and 5 hour pre-incubation at 37°C, inoculation of the culture at 1%, dosage of PAB NIZO379 grown in lactate broth at 5%, fermentation for 6 days and 37°C in all cases. The advised dosage of the alternative enzymes was approximately 0.3%. The Flavourzyme dosage was also brought to this level as well. The results showed that adding SMP resulted in an increase in saltiness and brothiness.

Ferments with intense salty/brothy/umami-type flavors and sweetness can be developed by selecting optimal combinations of enzymes and cultures. The desired fermentative salty/brothy flavor formation can be achieved in milk using the proteolytic enzyme Flavourzyme combined with the Lactobacillus helveticus-containing culture. For optimum result or for flavors close to American cheese, the combination of semi-skimmed milk supplemented with 10% skim milk powder and fermentation for 6 days at 37°C and pH 5.7, after 5 hour pre-incubation with 0.3 - 0.6 % (m/m) of Flavourzyme was selected. See Table 5.

**Table 5: Flavor Tailoring (Ferment selection based on the sensory evaluation).**

| | ***Enzymes and conditions*** | | | | ***Cultures and Conditions*** | | | | ***Additional*** |
|---|---|---|---|---|---|---|---|---|---|
| ***Enzyme*** | ***Dosage (%)*** | ***Time (h)*** | ***Temp (°C)*** | | ***Culture*** | ***Dosage (%)**** | ***Time (days)*** | ***Temp (°C)*** | |
| Flavourzyme | 0.3-06 | 5 | 37 | | LH13 | 1 | 6 | 37 | SMP |
| Flavourzyme | 0.3 -0.6 | 5 | 37 | | LH13+PAB NIZO379 | 1+5 | 6 | 37 | |

When applying PAB NIZO379, sweetness of the ferment is enhanced but at the same time salty/brothy properties decreased. The best fermentation combination has increased levels of total amino acids and, important for salty/umami flavors, increased glutamic acid.

Based on the ferment sensory properties two combination were selected to be applied to cheese curd for processed cheese flavor generation in the final product. These cultures, enzymes and process conditions are outlined in Table 6.

**Table 6: Flavor Tailoring (Application to cheese curds)**

| | ***Enzymes and Conditions*** | | | | | Cultures and Conditions | | | | |
|---|---|---|---|---|---|---|---|---|---|---|
| | ***Enzyme*** | ***Dosage (%)*** | ***Time (h)*** | ***Temp (°C)*** | | ***Culture*** | ***Dosage (%)**** | ***Time (days)*** | ***Temp (°C)*** | **Additions** |
| Ferment A | Flavourzyme | 0.3 | 5 | 37 | | LH13 | 1 | 6 | 37 | SMP |
| Ferment B | Flavourzyme | 0.3 | 5 | 37 | | LH13+PAB NIZO379 | 1+5 | 6 | 37 | |

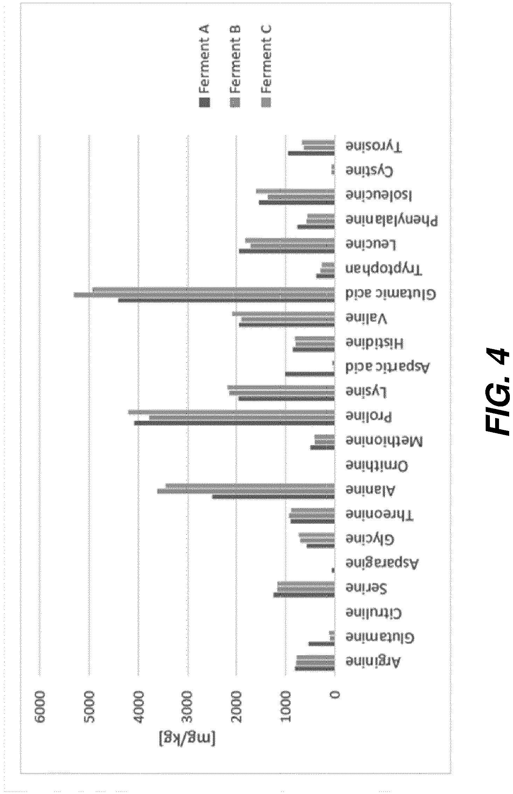

Individual free amino acid levels were evaluated in the ferments produced as per Table 6 prior to application in cheese curds. Results of the free amino acids are depicted in FIG. 4.

Flavor Formation Using Specific Enzyme Preparations. To promote the formation of fatty acids by hydrolysis of fat, and consequently affect flavor formation, selected commercial lipase preparations can be applied. The lipases were selected based on information from the supplier Biocatalysts: Lipomod 621MDP (Mixed fungal esterase and protease - generates full cheese flavor) and Lipomod 187MDP (Microbial lipase - generates "American" (cheddar) flavor). The enzymes' specific effects on flavor were evaluated and suitable dosages were established. Application of the enzyme preparations Lipomod 621MDP and Lipomod 187MDP resulted in lipolytic flavor.

Heat Treatment for Generating Specific Flavors. The focus in this non-enzymatic flavor formation is especially for obtaining "caramelized sweet" and "dairy/creamy" flavors. "Caramelized sweet" can evolve from chemical lactose-protein/amino acid reaction, yielding maltol, furan and furanone compounds. "Dairy/creamy" flavors are related to diacetyl formation, but also lactones, and possibly ketones, produced non-enzymically from fat are of relevance. Various cream samples and creams supplemented with lactose and/or whey powder were incubated and thereafter were sensorially tested. Commercially available pasteurized cream free of additives was used as basis.

Heating cream at 80°C for 24 hours yielded caramel-like and sweet flavors, which were associated with Dulce de Leche. Supplementing the cream with WPC35 or lactose resulted in both intensified caramel-like and sweet flavor formation during heating for 24 hours. Incubating skim milk for 24 hours at 80°C, when combined with both WPC35 and lactose, also yielded caramel-like flavors. Replacing lactose by glucose in these incubations resulted in less caramel-like flavor.

A "Dulce de Leche" caramel-like flavor can be produced by heat treatment of cream. The highest level of caramel-like flavor was achieved when heating cream supplemented with WPC35 and lactose at 80°C for 24 hours.

Embodiments of the disclosure can be described in view of the following clauses:
1. A flavor ferment for use in a natural cheese make process comprising a milk based substrate and having a free amino acid level of 200000-400000 µmol/L.
2. The flavor ferment of clause 1 wherein the free amino acid level is approximately 250000 µmol/L.
3. The flavor ferment of clause 1 or 2, wherein the glutamic acid level is 20000-60000 µmol/L, preferably approximately 40000 µmol/L.
4. The flavor ferment of any preceding clause having sweet tasting amino acids values of 5000-10000 µmol/L for glycine, 10000-30000 µmol/L for alanine and 10000-30000 µmol/L for proline, preferably approximately 6000 µmol/L for glycine, 20000 µmol/L for alanine and 20000 µmol/L for proline.
5. The flavor ferment according to any preceding clause having organic acids content of approximately 30-70 mg/g of lactic acid, 1.0-5.0 mg/g of succinic acid, 0.2-5.0 mg/g of acetic acid, and 0.2-9.0 mg/g of propionic acid.
6. The flavor ferment of clause 5 wherein the approximate organic acids content of lactic acid is 47.4 mg/g, of succinic acid is 1.6 mg/g, of acetic acid is 0.8 mg/g and of propionic acid is 0.9 mg/g.
7. A flavor ferment for use in a natural cheese make process comprising a milk based substrate and having a glutamic acid level of 20000-60000 µmol/L
8. The flavor ferment of clause 7 wherein the glutamic acid level is approximately 40000 µmol/L.
9. A flavor ferment for use in a natural cheese make process comprising a milk based substrate and having sweet tasting amino acids values of 5000-10000 µmol/L for glycine, 10000-30000 µmol/L for alanine and 10000-30000 µmol/L for proline.
10. The flavor ferment of clause 9 wherein the sweet tasting amino acids value are approximately 6000 µmol/L for glycine, 20000 µmol/L for alanine and 20000 µmol/L for proline.
11. A flavor ferment for use in a natural cheese make process comprising a milk based substrate and having organic acids content of approximately 30-70 mg/g of lactic acid, 1.0-5.0 mg/g of succinic acid, 0.2-5.0 mg/g of acetic acid, and 0.2-9.0 mg/g of propionic acid.
12. The flavor ferment of clause 11 wherein the approximate organic acids content of lactic acid is 47.4 mg/g, of succinic acid is 1.6 mg/g, of acetic acid is 0.8 mg/g and of propionic acid is 0.9 mg/g.
13. A flavor ferment for use in a natural cheese make process comprising a milk based substrate and having a free amino acid level of 200000-400000 µmol/L, having a glutamic acid level of 20000-60000 µmol/L, having sweet tasting amino acids values of 5000-10000 µmol/L for glycine, 10000-30000 µmol/L for alanine and 10000-30000 µmol/L for proline, and having organic acids content of approximately 30-70 mg/g of lactic acid, 1.0 - 5.0 mg/g of succinic acid, 0.2-5.0 mg/g of acetic acid, and 0.2-9.0 mg/g of propionic acid.
14. A method for producing natural cheese with flavor attributes similar to processed cheese, said method including the steps:
   creating a flavor ferment using one of reconstituted milk, concentrated milk, membrane filtered milk, UHT milk as a substrate and having the flavor attributes of processed cheese; and
   adding the flavor ferment during the production of natural cheese.
15. The method of clause 14 wherein the flavor ferment is added at a rate of 5-20 grams/kg of curd.

Various features and advantages of the invention are set forth in the following claims.

## Claims

1. A flavor ferment for use in a natural cheese make process comprising a milk based substrate and having a free amino acid level of 200000-400000 µmol/L.

2. The flavor ferment of claim 1 wherein the free amino acid level is approximately 250000 µmol/L.

3. The flavor ferment of claim 1 or 2, wherein the glutamic acid level is 20000-60000 µmol/L, preferably approximately 40000 µmol/L.

4. The flavor ferment of any preceding claim having sweet tasting amino acids values of 5000-10000 µmol/L for glycine, 10000-30000 µmol/L for alanine and 10000-30000 µmol/L for proline, preferably approximately 6000 µmol/L for glycine, 20000 µmol/L for alanine and 20000 µmol/L for proline.

5. The flavor ferment according to any preceding claim having organic acids content of approximately 30-70 mg/g of lactic acid, 1.0-5.0 mg/g of succinic acid, 0.2-5.0 mg/g of acetic acid, and 0.2-9.0 mg/g of propionic acid.

6. The flavor ferment of claim 5 wherein the approximate organic acids content of lactic acid is 47.4 mg/g, of succinic acid is 1.6 mg/g, of acetic acid is 0.8 mg/g and of propionic acid is 0.9 mg/g.

7. A flavor ferment for use in a natural cheese make process comprising a milk based substrate and having a glutamic acid level of 20000-60000 µmol/L

8. The flavor ferment of claim 7 wherein the glutamic acid level is approximately 40000 µmol/L.

9. A flavor ferment for use in a natural cheese make process comprising a milk based substrate and having sweet tasting amino acids values of 5000-10000 µmol/L for glycine, 10000-30000 µmol/L for alanine and 10000-30000 µmol/L for proline.

10. The flavor ferment of claim 9 wherein the sweet tasting amino acids value are approximately 6000 µmol/L for glycine, 20000 µmol/L for alanine and 20000 µmol/L for proline.

11. A flavor ferment for use in a natural cheese make process comprising a milk based substrate and having organic acids content of approximately 30-70 mg/g of lactic acid, 1.0-5.0 mg/g of succinic acid, 0.2-5.0 mg/g of acetic acid, and 0.2-9.0 mg/g of propionic acid.

12. The flavor ferment of claim 11 wherein the approximate organic acids content of lactic acid is 47.4 mg/g, of succinic acid is 1.6 mg/g, of acetic acid is 0.8 mg/g and of propionic acid is 0.9 mg/g.

13. A flavor ferment for use in a natural cheese make process comprising a milk based substrate and having a free amino acid level of 200000-400000 µmol/L, having a glutamic acid level of 20000-60000 µmol/L, having sweet tasting amino acids values of 5000-10000 µmol/L for glycine, 10000-30000 µmol/L for alanine and 10000-30000 µmol/L for proline, and having organic acids content of approximately 30-70 mg/g of lactic acid, 1.0 - 5.0 mg/g of succinic acid, 0.2-5.0 mg/g of acetic acid, and 0.2-9.0 mg/g of propionic acid.

14. A method for producing natural cheese with flavor attributes similar to processed cheese, said method including the steps:
creating a flavor ferment using one of reconstituted milk, concentrated milk, membrane filtered milk, UHT milk as a substrate and having the flavor attributes of processed cheese; and
adding the flavor ferment during the production of natural cheese.

15. The method of claim 14 wherein the flavor ferment is added at a rate of 5-20 grams/kg of curd.
